# EUROPEAN PATENT APPLICATION

(11) **EP 2 894 331 A1**
(43) Date of publication of application: **15.07.2015**
(21) Application number: 14188638.2
(22) Date of filing: 13.10.2014
(51) Int. Cl.: F03G 7/10

(54) **Energy generating device**

(30) Priority: 08.01.2014 ES 201430020 U
(71) Applicant: Suarez Cuervo, Jose, 33120 Pravia (Asturias) (ES)
(72) Inventor: Suarez Cuervo, Jose, 33120 Pravia (Asturias) (ES)
(74) Representative: Ungria López, Javier

(57) **Abstract**

The energy generating device (1) object of the present application comprises a first kinematic chain (5), at least one second motion output kinematic chain (6), a first arm (8) joined to an end of the first kinematic chain (5) and a second arm (9) joined to the opposite end of the first kinematic chain (5), in the device object of the invention the first kinematic chain (5) undertakes a path limited by the arms (8, 9) that move between a first stop element (15) and a second stop element (16), wherein the arms (8, 9) comprise a movable mass (10) that moves along the length of the arms (8, 9) that is located at one end of the arms (8, 9) when they enter into contact with the first stop element (15), and at the opposite end when the arms (8, 9) enter into contact with the second stop element (16).

## Description

### Object of the invention

The present invention relates to, as provided in its title, an energy generator, and in particular to a machine capable of generating mechanical energy from the movement of two arms joined by a kinematic chain. It is a device that is applicable to the sphere of everyday life and to industrial facilities.

### Technical problem to be solved and background of the invention

Different mechanical energy generating mechanisms which may be transformed into pressure or electricity by means of other components are known in the state of the art.

Energy generating machines are very large machines that require large constructions for their installation with high construction costs, and they are machines that require large facilities. Due to the foregoing, the construction of these machines requires prior feasibility studies and in many occasions, said machines interfere with the environment, due to which they present problems when considering the potential construction and installation thereof.

There are multiple documents in the state of the art that disclose energy generating machines. For example, international publication WO2007/026378 discloses a machine that, once it starts to turn, it tends to continue said rotational movement, not requiring fuel for its operation; it only uses a certain amount of water. The size of the machine depends on the demand for electrical energy and the amount of water it uses is later reused during the start-up of said machine.

Document WO 2008/146053 is also known, which discloses an electrical energy generating device from an engine, such that it produces more electrical energy than the electrical energy it uses, given that, through a pulley system and a wheel, several generator systems are connected to a single system that uses energy.

### Description of the invention

The object of the present invention is to expose an energy generating device. Said energy is obtained from the movement of arms joined to a chain, which in turn moves a generator, the movement of the arms being generated by the force of gravity over mobile weights that move along the arms freely, due to which the device object of the invention begins to move freely and without requiring any energy input.

The energy generating device comprises a first kinematic chain, at least one second motion output kinematic chain, a first arm joined to an end of the first kinematic chain and a second arm joined to the opposite end of the first kinematic chain.

The first kinematic chain undertakes a path limited by the arms, which move between a first stop element and a second stop element.

Both the first arm and the second arm comprise a movable mass along the length of the arms, such that the movable mass is located at one end of the arms when the arms are in contact with the first stop element and at the opposite end when the arms are in contact with the second stop element.

The movable mass moves along the length of the arms during the path of the arms, such that when the first arm is in contact with the first stop element, the second arm is in contact with the second stop element.

The movement of the first kinematic chain is extracted from the device through the second kinematic chain.

In the energy generating device, the arms are joined to the first kinematic chain through flexible supports, and are supported by guides through bearings located at one end of each arm.

The arms of the device object of the invention move supported by the bearings between the first stop element and the second stop element, and said arms present a rotational movement around the bearing, said rotational movement being limited through the action of the flexible supports.

The energy generating device comprises a set of support pinions over which the first kinematic chain is extended.

The set of support pinions of the energy generating device comprises at least two end pinions, one central rotating pinion and at least one output pinion related to at least one pinion of the set of supporting pinions, such that the first kinematic chain is supported by the at least two end pinions and the central rotating pinion, and the second kinematic chain is supported by the at least one output pinion.

The energy generating device comprises a chassis, which serves a support for the components of the device.

### Brief description of the figures

In order to supplement the description being made of the present invention and to facilitate a better comprehension of the features that distinguish the same, figures are attached to the present specification as an integral part thereof, which represent different examples of embodiments of the invention in an illustrative rather than limitative manner.

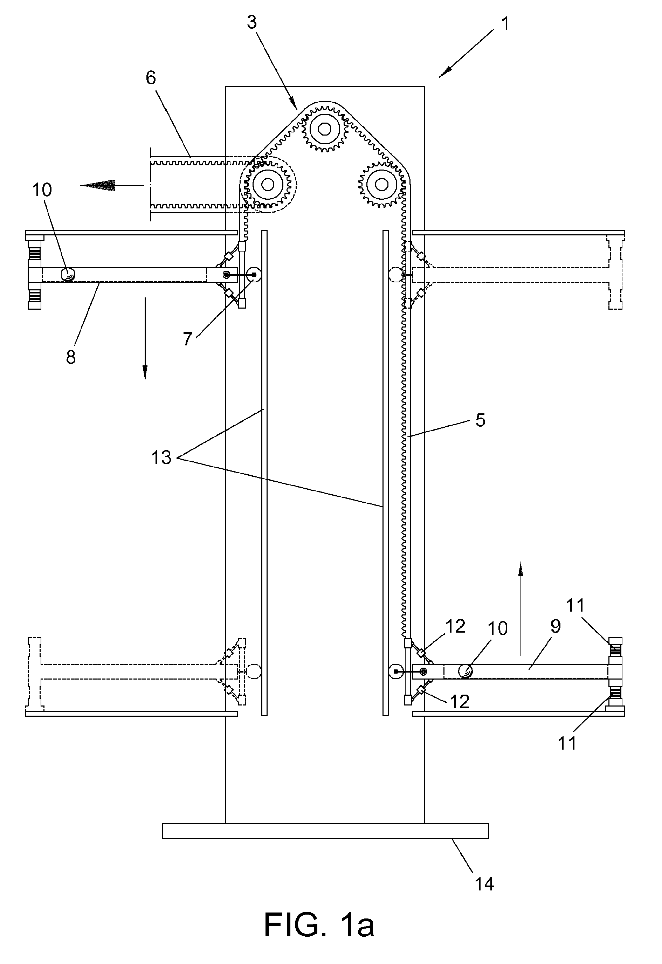

Figure 1a shows a front schematic view of the device object of the invention in a position wherein the arms are located in an end position in contact with the stop elements.

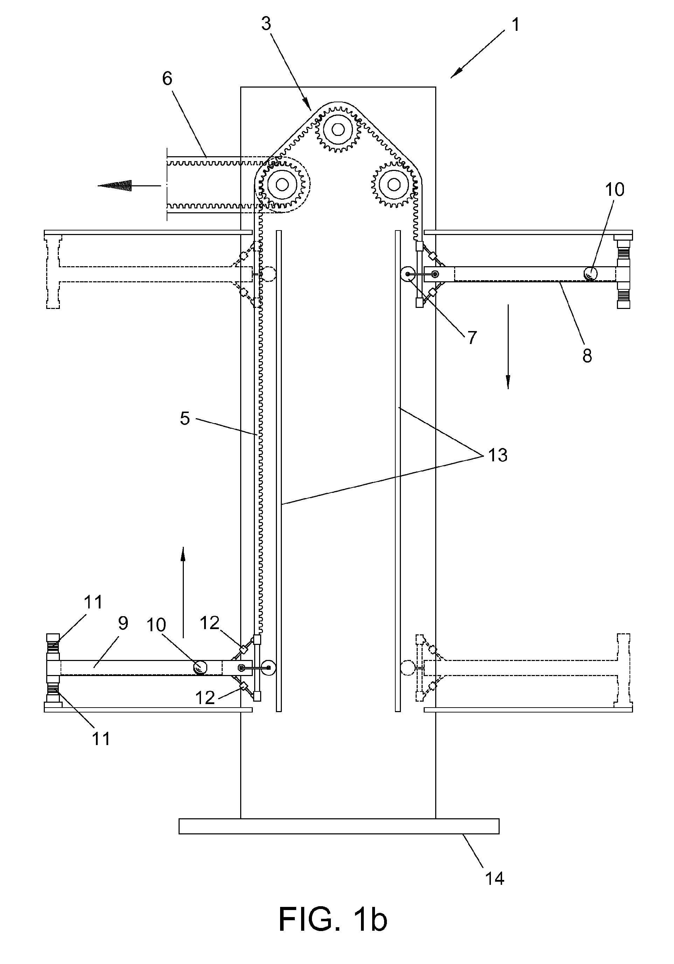

Figure 1b shows a front schematic view of the device object of the invention in a position wherein the arms are located in the end position opposite to the position of figure 1 a.

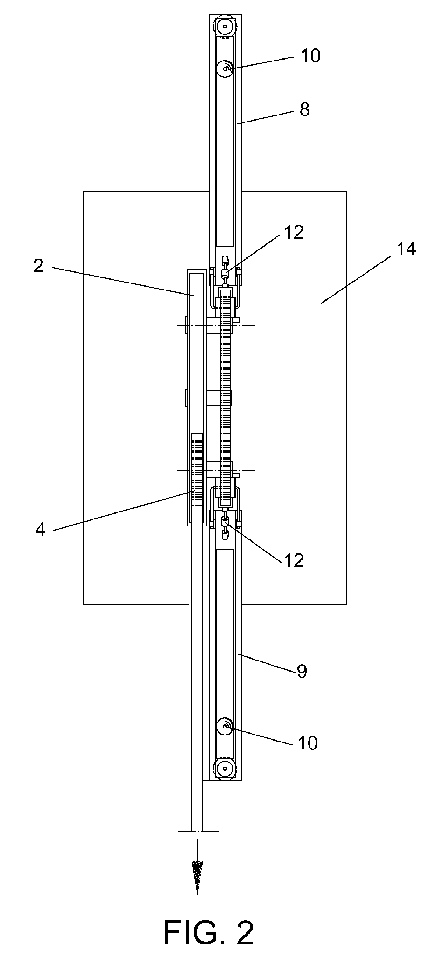

Figure 2 shows a lateral schematic view of the device object of the invention.

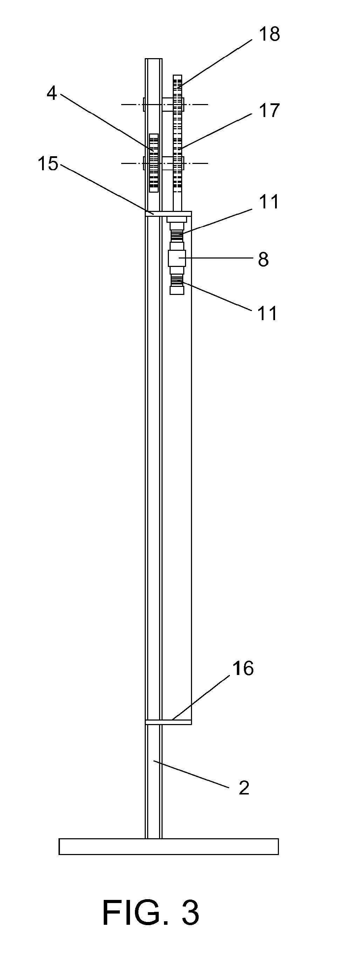

Figure 3 shows a plant schematic view from the upper part of the device object of the invention.

A list of the different elements forming part of the device object of the invention is exposed below, showing their corresponding numerical references used in the 3 figures attached to this specification.
1.- device;
2.- chassis;
3.- support pinions;
4.- output pinion;
5.- first kinematic chain;
6.- second kinematic chain;
7.- bearings;
8.- first arm;
9.- second arm;
10.- movable mass;
11.- elastic stop element;
12.- flexible support;
13.- bearing guide;
14.- base;
15.- first stop element;
16.- second stop element;
17.- end pinion;
18.- central pinion.

### Preferred embodiment of the invention

The energy generating device object of the invention resorts to a first arm (8) and a second arm (9), through which a movable mass can move freely, said arms being joined, by one end, to a first kinematic chain (5) and the arms moving between a first stop element (15) and a second stop element (16).

The device (1) object of the invention comprises a chassis (2) on which the rest of the elements forming part of the device (1) are arranged.

The device (1) comprises a first kinematic chain (5) that comprises, at its ends, the arms (8, 9), which are joined by one end of said arms (8, 9) to said kinematic chain (5) through flexible supports (12). In the preferred embodiment of the invention, the flexible supports (12) are configured as two braces, one located above the arm (8, 9) and the other one located below the arm (8, 9).

The arms (8, 9), by the same end through which they are joined to the first kinematic chain (5), are in turn joined to bearings (7) that move guided on guides (13), said guides (13) being located on the chassis (2). With the foregoing configuration, the arms (8, 9), joined to the ends of the first kinematic chain (5), move along said guides (13) supported by the bearings (7).

Due to the connection through the bearing (7), the arms (8, 9) present a rotational movement around said bearing (7), such that said rotational movement is limited by the flexible supports (12) that affix each arm (8, 9) to the first kinematic chain (5).

The first kinematic chain (5) is joined, by the ends thereof, to the bearings (7), to which arms (8, 9) are also joined. Likewise, the chain is supported by a set of support pinions (3) during the movement thereof. In the preferred embodiment of the invention, the set of support pinions (3) comprises three pinions, two end pinions (17) and one central rotating pinion (18), such that they are distributed in the chassis (2) in order for the first kinematic chain (5) to undertake a triangle-shaped path in the upper part of said chassis (2).

An output pinion (4) is connected to a pinion of the set of support pinions (3), to which a second motion output kinematic chain (6) is connected with respect to the motion of the device (1) object of the invention. This second kinematic chain (6) is in turn connected to a dynamo (not shown in the figures) or to any other device that gathers the movement of the second kinematic chain (6).

In the chassis (2), where there is a dimension similar to the length of the arms (8, 9) that protrudes from the chassis, a first stop element (15) and a second stop element (16) are located, which limit the vertical movement of the arms (8, 9), thereby limiting the path of the first kinematic chain (5) to which the arms (8, 9) are joined.

The arms (8, 9) comprise an elastic stop element (11), which enters into contact with the first stop element (15) and with the second stop element (16) at the ends of the path undertaken by each arm (8, 9) by one side of the chassis (2) of the device (1) object of the invention.

Likewise, the movement of the first kinematic chain (5) is maintained over time by means of the arms (8, 9). The arms (8, 9) comprise a movable mass (10) that moves along the length of said arms (8, 9), such that the operation thereof is the following:
- whenever one of the arms (8, 9) reaches the second stop element (16), the balancing movement of the arm (8, 9) makes the movable mass (10) move towards the first kinematic chain (5),
- whenever one of the arms (8, 9) reaches the second stop element (16), the opposite arm (8, 9) reaches the first stop element (15), wherein, due to the balancing movement of the arm (8, 9), the movable mass (10) moves away from the first kinematic chain (5),
- the difference in the distances of the movable masses (10) with respect to the central rotating pinion (18) of the first kinematic chain (5) makes the kinematic chain (5) move,
- the previous cycle is repeated; however, the arm (8, 9) that entered into contact with the second stop element (16) now enters into contact with the first stop element (15), and the arm (8, 9) that entered into contact with the first stop element (15) now enters into contact with the second stop element (16),
- the movement of the device (1) object of the invention is repeated constantly due to the force of the movable masses (10) with respect to the arms (8, 9) of the device (1), whenever an arm (8, 9) is in contact with the first stop element (15), the opposite arm (8, 9) is in contact with the second stop element (16), such that the movable masses (10) incorporated in the arms (8, 9) favor the movement thereof.

Therefore, the device (1) object of the invention presents an indefinite movement provided by the movement of the movable masses (10) along the length of the arms (8, 9) during the movement of said arms (8, 9) between the first stop element (15) and the second stop element (16).

The invention should not be limited to the particular embodiment described in this document. Experts in the art can develop other embodiments based on the description made herein. In consequence, the scope of the invention is defined by the following claims.

## Claims

1. Energy generating device (1) that comprises a first kinetic chain (5), at least one second motion output kinematic chain (6), a first arm (8) joined to one end of the first kinematic chain (5) and a second arm (9) joined to the opposite end of the first kinematic chain (5), **characterized in that** the first kinematic chain (5) undertakes a path limited by the arms (8, 9) that move between a first stop element (15) and a second stop element (16), wherein the first arm (8) and the second arm (9) comprise a movable mass (10) that moves along the arms (8, 9), such that the movable mass (10) is located at one end of the arms (8, 9) when the arms (8, 9) are in contact with the first stop element (15), and at the opposite end when the arms (8, 9) are in contact with the second stop element (16), moving along the length of the arms (8, 9) during the movement of the arms (8, 9), and such that when the first arm (8) is in contact with the first stop element (15), the second arm (9) is in contact with the second stop element (16); and the movement of the first kinematic chain (5) is extracted from the device (1) by means of the second kinematic chain (6).

2. Energy generating device (1) according to claim 1, **characterized in that;**
- the arms (8, 9) are joined to the first kinematic chain (5) through flexible supports (12) and,
- the arms (8, 9) are supported by guides (13) through bearings (7) located at one end of each arm (8, 9).
such that the arms move supported by the bearings (7) between the first stop element (15) and the second stop element (16), and said arms (8, 9) present a rotational movement around the bearing (7), said rotational movement being limited by the action of the flexible supports (12).

3. Energy generating device (1) according to claim 1, **characterized in that** it comprises a set of support pinions (3) over which the first kinematic chain (5) is extended.

4. Energy generating device (1) according to claim 2, **characterized in that** the set of support pinions (3) comprises:
- at least two end pinions (17),
- a central rotating pinion (18),
- at least one output pinion (4) related to at least one pinion of the set of support pinions (3);
such that the first kinematic chain (5) is supported by the at least two end pinions (17) and the central rotating pinion (18), and the second kinematic chain is supported by the at least one output pinion (4).

5. Energy generating device (1) according to claim 1, **characterized in that** it comprises a chassis (2) that serves as support for the components of the device (1).
